Europäisches Patentamt

European Patent Office

Office européen des brevets

(19)

(11) Veröffentlichungsnummer: **0 094 615**
**B1**

(12) # EUROPÄISCHE PATENTSCHRIFT

(45) Veröffentlichungstag der Patentschrift:
**13.05.87**

(51) Int. Cl.⁴: **A 61 C 13/08,** A 61 C 5/10

(21) Anmeldenummer: **83104649.5**

(22) Anmeldetag: **11.05.83**

(54) Verfahren zum Herstellen von Zahnersatzteilen aus Metall.

(30) Priorität: **14.05.82 DE 3218300**

(43) Veröffentlichungstag der Anmeldung:
**23.11.83 Patentblatt 83/47**

(45) Bekanntmachung des Hinweises auf die Patenterteilung:
**13.05.87 Patentblatt 87/20**

(84) Benannte Vertragsstaaten:
**AT CH DE FR GB IT LI NL SE**

(56) Entgegenhaltungen:
**US - A - 3 997 637**

(73) Patentinhaber: **Wismann, Horst, Gartenstrasse 22,
D-8162 Schliersee (DE)**

(72) Erfinder: **Wismann, Horst, Gartenstrasse 22,
D-8162 Schliersee (DE)**

(74) Vertreter: **Klingseisen, Franz, Dipl.-Ing. et al, Dr. F.
Zumstein sen. Dr. E. Assmann Dr. F. Zumstein jun.
Dipl.-Ing. F. Klingseisen Bräuhausstrasse 4,
D-8000 München 2 (DE)**

## Beschreibung

Die Erfindung betrifft ein Verfahren zum Herstellen von Zahnersatzteilen aus Edelmetall nach dem Oberbegriff des Anspruchs 1.

Ein derartiges Verfahren wird seit vielen Jahren in der zahnärztlichen Praxis allgemein angewandt, wobei mittels Gips oder Kunststoff eine Komplementärform des Ersatzteils aus Wachs hergestellt und in eine Einbettmasse eingebettet wird. Das Wachs wird ausgeschmolzen, so dass man in der Einbettmasse eine Giessform erhält, die dann zur Herstellung eines Abgusses mit Edelmetall, z.B. mittels eines Schleudergussverfahrens, ausgegossen wird. Dabei wird in der Regel der aus dem Edelmetall hergestellte Abguss, der oft von einem zahntechnischen Laboratorium gefertigt wird, von Hand nachbearbeitet, um das endgültige Zahnersatzteil genau passend zu gewinnen. Es gelingt nämlich nicht, das hochschmelzende Edelmetall (z.B. schmilzt reines Gold bei 1064 °C, und übliche Zahngold-Legierungen können Schmelzpunkte bei etwa 960 °C haben) mit so hoher Genauigkeit zu giessen, dass eine Nachbearbeitung von Hand entfallen kann. Oft ist der Abguss so ungenau, dass er nicht verwendbar ist und ein neuer Abguss hergestellt werden muss. Häufig hat der Abguss Giessfehler, beispielsweise Lunker, und auch dann muss ein neuer Abguss angefertigt werden. Neben diesen Schwierigkeiten ist es nachteilig, dass der Abguss, selbst wenn man ihn als Hohlkörper giesst, eine verhältnismässig grosse Menge des teuren Edelmetalls erfordert, weil beim Giessen eine bestimmte Wanddicke nicht unterschritten werden kann.

Wegen der beschriebenen Schwierigkeiten und Nachteile bemüht sich die Fachwelt seit langem, zum Herstellen von Zahnersatzteilen aus Edelmetall andere Verfahren zu schaffen, die weniger Nacharbeit von Hand und/oder einen geringeren Verbrauch an Edelmetall erfordern. Insbesondere sind Verfahren bekannt geworden, bei welchen man das Modell oberflächlich elektrisch leitend macht und galvanisch mit einer Edelmetallschicht überzieht und danach das Modell von dem so hergestellten Edelmetallkörper entfernt. Dabei kann auch keramisches Material zusammen mit dem Edelmetall abgeschieden werden (US-PS 3 567 592) oder nachträglich aufgebracht werden, wobei ggf. auch danach der Edelmetallkörper weggeätzt werden kann (DE-OS 2 518 355). Obwohl diese Verfahren die Schwierigkeiten und den hohen Materialverbrauch des Edelmetall-Giessens grundsätzlich vermeiden, konnten sie sich nicht in die Praxis einführen, weil es schwierig ist, eine elektrisch leitende Schicht so gleichmässig und dünn auf das Modell aufzutragen, dass sie keine Modellierfehler hervorruft, aber dennoch eine überall ausreichende und gleichmässige galvanische Abscheidung sicherstellt. Auch durch Verwendung von speziell für zahnärztliche Zwecke ausgesuchten Metallisierungs-Überzugmassen (US-PS 2 841 548) konnten diese Schwierigkeiten nicht überwunden werden. Insbesondere ist bei dem beschriebenen bekannten Verfahren störend, dass für das Aufbringen der die oberflächliche elektrische Leitfähigkeit erzeugenden Masse eine grosse Sorgfalt und manuelle Geschicklichkeit wegen der verschiedenen anatomischen Formen erforderlich sind und dennoch keine zufriedenstellenden und genügend gleichmässigen Ergebnisse erzielt werden.

Die vorliegende Erfindung geht von der Aufgabe aus, ein einfaches und wirtschaftliches Verfahren zum Herstellen von Zahnersatzteilen aus Metall zu schaffen, das mit hoher Gleichmässigkeit und Zuverlässigkeit Ersatzteile von sehr hoher Genauigkeit liefert.

Nach der Erfindung wird diese Aufgabe gelöst mit dem Verfahren nach dem Anspruch 1.

Bei dem erfindungsgemässen Verfahren werden die typischen Schwierigkeiten sowohl des Giessens von Metall bei hoher Temperatur als auch der Oberflächenbehandlung der vorbestimmten anatomischen Formen zu Erzielung elektrischer Leitfähigkeit vermieden. Das Verfahren kann ohne weiteres standardisiert und automatisiert werden und erfordert zu seiner Durchführung lediglich durchschnittliche Fertigkeiten, so dass es von angelernten Arbeitskräften durchgeführt werden kann. Man erhält direkt das passende Metallteil, denn wegen der hohen Genauigkeit des Herstellungsverfahrens ist in der Regel ein Nachbearbeiten von Hand nicht erforderlich; allenfalls können gelegentlich ganz geringfügige Nachbesserungsarbeiten zweckmässig oder empfehlenswert sein.

Da der Abguss aus einem niedrigschmelzenden, elektrisch leitfähigen Material, insbesondere unedlem Metall hergestellt wird, das freizügig allein im Hinblick auf seine Giesseigenschaften ausgewählt sein kann, hat auch schon der Abguss die gewünschte hohe Formgenauigkeit. Dazu trägt bei, dass das Giessen bei niedriger Temperatur ohnehin weniger Schwierigkeiten bereitet und genauer ist als das Giessen von hochschmelzenden Edelmetallen.

Wegen der hohen Genauigkeit der nach dem erfindungsgemässen Verfahren hergestellten Metallteile kann die galvanisch hergestellte Metallschicht wesentlich dünner gehalten werden als beim herkömmlichen Giessverfahren, so dass sich eine sehr beträchtliche Ersparnis an Edelmetall ergibt. Beim bekannten Edelmetallgiessen soll eine Wanddicke des gegossenen Zahnersatz-Rohlings von 0,5 mm wegen der erforderlichen Festigkeit nicht unterschritten werden und weil zum Nacharbeiten von Hand genügend Material zur Verfügung stehen muss. Dagegen ist bei dem erfindungsgemässen Verfahren eine Wanddicke von ca. 0,1 bis ca. 0,3 mm ausreichend, weil ein Nacharbeiten von Hand mit merklichem Materialabtrag nicht erforderlich ist und sich durch den Aufbau des Metallteils durch Galvanisieren eine höhere Festigkeit des Metalls ergibt. Beispielsweise kann nach dem erfindungsgemässen Verfahren eine dreiteilige Brücke, die in herkömmlicher Edelmetall-Giesstechnik etwa 10 g Gold erfordert, mit nur 2 bis 4 g Gold hergestellt werden; sie hat überdies eine sehr viel bessere Genauigkeit. Im allgemeinen kann mit dem erfindungsgemässen Verfahren eine Gold-Einsparung von mindestens 50% gegenüber der herkömmlichen Edelmetall-Giesstechnik erzielt werden.

Es versteht sich, dass erfindungsgemäss hergestellte Zahnersatzteile ebenso wie herkömmliche Zahnersatzteile durch unterlegtes Material, beispielsweise Kunststoff oder Porzellan, gegen die im Gebrauch auftretenden Belastungen verstärkt werden können. Auch die vielfach üblichen zusätzlichen Überzüge aus Kunststoff, Porzellan und dergleichen zur Verbesserung des Aussehens können bei den erfindungsgemäss hergestellten Zahnersatzteilen angewandt werden.

Ein weiterer wichtiger Vorteil des erfindungsgemässen Verfahrens besteht darin, dass es wegen der einfachen und leicht standardisierbaren Arbeitsschritte wesentlich schneller durchgeführt werden kann als das herkömmliche Verfahren mit Edelmetall-Giessen. Durchschnittliche zahntechnische Laboratorien kommen auf eine Produktion von etwa 10 bis 15 Zahnersatz-Gliedern pro Mann und Tag. Mit dem erfindungsgemässen Verfahren lässt sich dagegen ohne weiteres eine Produktion von etwa 160 Zahnersatz-Gliedern pro Mann und Tag erzielen, also mehr als zehnmal so viel wie in herkömmlicher Technik. Dabei kann der wichtige Vorteil ausgenutzt werden, dass die Galvanisierung, die beispielsweise etwa 10 Stunden erfordern kann, über Nacht unbeaufsichtigt durchgeführt werden kann.

Die Ersparnis an Edelmetall, die hohe Produktionsgeschwindigkeit und der Wegfall hochqualifizierter Nachbearbeitung führt insgesamt zu einer sehr starken Verringerung der Herstellungskosten. Das ist bei den bekanntermassen hohen Preisen für Zahnersatz ein sehr wichtiger Vorteil.

Vorteilhafte Weiterbildungen des erfindungsgemässen Verfahrens sind in den abhängigen Ansprüchen und in der folgenden Beschreibung angegeben.

Das erfindungsgemässe Verfahren wird beispielsweise anhand der Zeichnung näher erläutert. Es zeigen

Fig. 1 ein Modell und die mittels des Modells hergestellte Gussform,

Fig. 2 die Herstellung eines Abgusses aus niedrig schmelzendem Metall mittels der Giessform, und

Fig. 3 die Herstellung des Metallersatzteils mittels Galvanisieren und Abschmelzen des Abgusses.

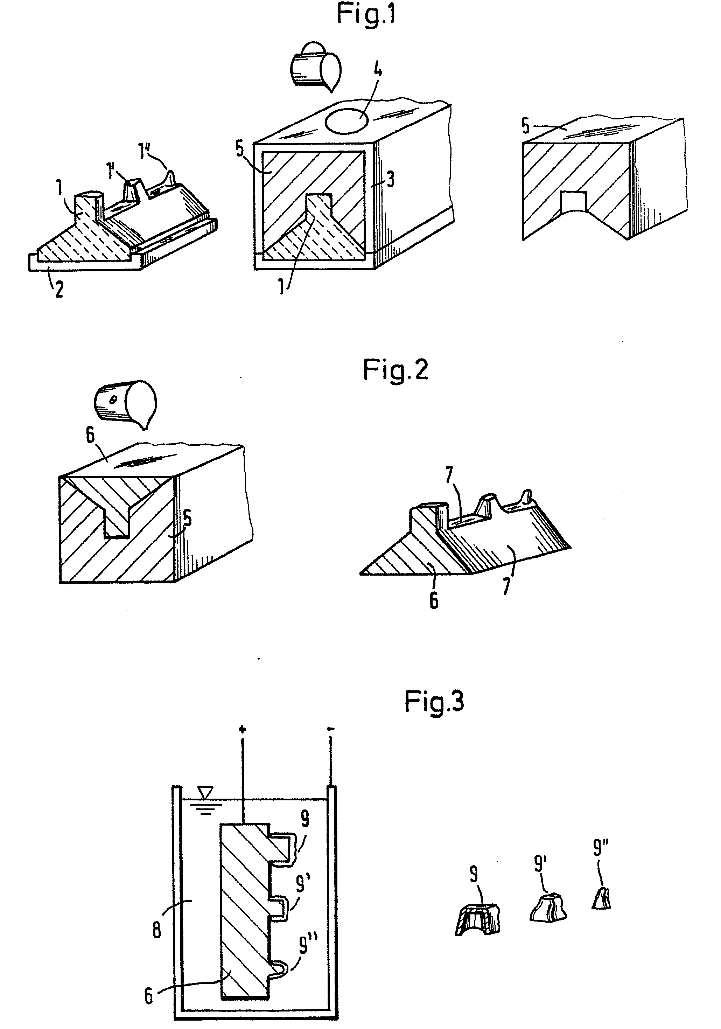

In Fig. 1 ist 1 eine Komplementärform des herzustellenden Metallersatzteils, wobei bei diesem Ausführungsbeispiel drei Ersatzteile 1, 1' und 1'' gleichzeitig hergestellt werden sollen. Die Komplementärform kann aus Gips oder einem anderen Material bestehen und wird in bekannter Weise hergestellt. Bei dem dargestellten Ausführungsbeispiel sollen Kronen für Zahnstümpfe hergestellt werden. Die Komplementärform kann aber auch je nach herzustellendem Metallteil jede beliebige andere Form haben, beispielsweise kann es eine Negativform sein anstelle der dargestellten Positivform.

Die Komplementärform 1 wird zweckmässigerweise auf einem Sockel 2 angebracht. Auf den Sockel 2 wird ein die Komplementärform umschliessender Behälter 3 angeordnet, der über eine Eingussöffnung 4 mit einem geeigneten Material ausgegossen wird, das sich verfestigt. Nach dem Verfestigen dieses Materials und Abnahme von der Komplementärform 1 erhält man eine Giessform 5, welche die umgekehrte Form der Komplementärform enthält, hier die Negativform der Komplementärform 1.

Ein wesentlicher Vorteil ergibt sich dann, wenn man die Giessform aus formgenauem, elastischem Kunststoff herstellt. Die Verwendung eines formgenauen elastischen Kunststoffs bietet den Vorteil, dass man die Giessform 5 leicht von der von ihr zunächst eingeschlossenen Komplementärform 1 trennen kann, ohne dass die Gefahr besteht, die Giessform dabei zu beschädigen oder bleibend zu verformen. Vorzugsweise verwendet man für die Giessform 5 einen Zweikomponenten-Silikonkautschuk. Derartige Kunststoffe lassen sich bequem und rasch durch Aushärtenlassen einer giessfähigen Ausgangsmischung der beiden Komponenten herstellen. Das Aushärten geht schnell vor sich, z.B. in 15 bis 30 Minuten.

Geeignete Kunststoffe, insbesondere der zuletzt erwähnte Zweikomponenten-Silikonkautschuk, sind im Handel erhältlich, beispielsweise von der Firma S.W.S. Silicon Corporation, Adrian, Michigan, USA. Beim Giessen der Giessform 5 wird an das noch flüssige Material Druck oder Vakuum angelegt, so dass man eine exakte, blasenfreie Giessform 5 erhält.

Die Fig. 2 zeigt die Herstellung eines Abgusses 6 der Komplementärform 1, wobei ein niedrig schmelzendes unedles Metall in die Giessform 5 gegossen wird. Den Abguss 6 erhält man nach Verfestigen des niedrig schmelzenden Metalls und Abnahme der Giessform 5.

Als niedrig schmelzendes Metall kann eine Zinn-Blei-Wismut-Cadmium-Legierung mit einem Schmelzbereich von 65°C bis 300°C verwendet werden, je nach Temperaturbeständigkeit des Materials der Giessform 5. Als geeignet hat sich eine bei etwa 95°C schmelzende Zinn-Blei-Wismut-Legierung herausgestellt. Vorzugsweise beträgt der Wismut-Gehalt etwa 1 Gew.-%. Derartige Legierungen und andere Legierungen mit ähnlichen Eigenschaften sind im Stand der Technik bekannt. Diese Legierungen haben bekanntermassen den Vorteil, dass sie sehr formgenaue Abgüsse ermöglichen.

Der der Komplementärform 1 entsprechende Abguss 6 wird auf den Flächen 7, die nicht mit einem galvanischen Überzug versehen werden sollen, abgedeckt, z.B. durch einen Lack, der auf den Abguss 6 aufgestrichen werden kann und durch das galvanische Bad nicht abgelöst wird.

Wie Fig. 3 zeigt wird danach der so vorbehandelte Abguss 6 in ein galvanisches Bad 8 eingetaucht, beispielsweise in ein Goldsulfit-Bad. Auf den freiliegenden Metallflächen des Abgusses 6 lagert sich aus dem Bad das vorbestimmte Metall, z.B. Gold, ab und bildet so das erwünschte Ersatzteil 9.

Nach Abschluss des Galvanisiervorganges kann das Abguss-Material leicht durch Wärmeeinwirkung, z.B. in einem Schmelzbad, durch Heizgeräte oder dgl. weggeschmolzen werden. Durch eine chemische Nachbehandlung können eventuelle Reste des Abgussmaterials von dem Ersatzteil 9 entfernt werden. Es ist aber auch möglich, den Abguss 6 vollständig chemisch aufzulösen. Damit sich beim Entfernen des Abgusses 6 nicht die Oberfläche der galvanisch hergestellten Edelmetallschicht bzw. des Metallteils 9 verändert, z.B. verfärbt, ist es zweckmässig, dass man auf die Edelmetallschicht eine beim Entfernen des Abgusses beständige, jedoch anderweitig leicht entfernbare Schutzschicht aufträgt. Am einfachsten kann eine solche Schutzschicht galvanisch aufgetragen werden. Da ohnehin galvanisch gearbeitet wird, wird zweckmässigerweise eine galvanische Schutzschicht auf das Ersatzteil 9 aufgetragen. Besonders einfach ist die Verwendung einer Schutzschicht aus Nickel oder Nickellegierung. Eine solche Schutzschicht kann leicht galvanisch aufgetragen und leicht durch Auflösen in Säure wieder entfernt werden.

Das bei dem erfindungsgemässen Verfahren erhaltene Ersatzeil 9 wird häufig aus kosmetischen Gründen mit einem Überzug, beispielsweise aus Porzellan, Email, Kunststoff oder dgl., versehen. Um eine gute Verbindung eines solchen Überzugs mit dem Edelmetallteil 9 zu erhalten, kann man dieses mit einer die Haftung des Überzuges fördernden Oberfläche versehen. Dafür geeignete Techniken sind bekannt, z.B. aus den deutschen Patentschriften 728 497 und 880 783 und der US-PS 2 569 453. Besonders einfach ist es, die Haftung des Überzuges dadurch zu fördern, dass man die Edelmetallschicht mit rauher Oberfläche herstellt. Das kann vorzugsweise dadurch geschehen, dass man beim Herstellen der Edelmetallschicht eine erste Teilschicht mit glatter Oberfläche und darauf eine daran fest haftende zweite Teilschicht mit rauher Oberfläche elektrolytisch abscheidet. Die zweite Teilschicht kann z.B. unter Erhöhen der Stromdichte oder unter Verwendung eines Bades ohne Kornverfeinerungsmittel abgeschieden werden. Vorzugsweise hat die erste Teilschicht eine Dicke von 0,05 bis 0,2 mm und die zweite Teilschicht eine kleinere Dicke als die erste Teilschicht. Eine verhältnismässig dünne zweite Teilschicht genügt, um die gewünschte Verbesserung des Haftens zu erzielen, z.B. 5–50 µ.

Das Haften eines Überzuges aus Porzellan, Keramik, Kunststoff und dergleichen an der Edelmetallschicht lässt sich besonders gut dadurch verbessern, dass man vor dem Auftragen des Überzuges eine das Haften des Überzuges verbessernde Zwischenschicht aus anderem Material aufträgt. Geeignet sind vor allem Nickel und Nickellegierungen, insbesondere die gleichen Materialien, die auch beim Entfernen des Abgusses als Schutzschicht wirken können. Geeignete Zwischenschicht-Materialien sind auch in der DE-OS 2 518 355 genannt. Es ist vorteilhaft, die Zwischenschicht galvanisch aufzutragen, weil das Verfahren ohnehin galvanische Arbeitsschritte enthält. Oft ergibt sich eine weitere Verbesserung des Haftens des Überzugs, wenn man eine nach dem Auftragen oxidierte Zwischenschicht verwendet.

Für die Verbindung einer Goldschicht beispielsweise mit Kunststoff kann auf den Abguss aus niedrig schmelzendem Metall zunächst eine Schicht aus Gold aufgalvanisiert werden, worauf eine Teilschicht aus Partikeln aufgalvanisiert wird, die aus einem Gemisch aus Kunststoff und Metalloxid oder dem betreffenden Metall bestehen, das die galvanische Abscheidung ermöglicht. Diese in die Oberfläche des so hergestellten metallischen Zahnersatzteils eingelagerten Partikel ergeben eine gute Verbindung mit dem dann darauf aufgebrachten Kunststoff, der von der gleichen Art ist wie der im zuvor genannten Gemisch. Der Anteil an Kunststoff in dem Gemisch kann bis zu 50% betragen.

Nach einem zweiten Ausführungsbeispiel wird auf die Schicht aus reinem Gold mittels eines anderen galvanischen Bades eine gröbere Schicht aus Gold aufgalvanisiert, die einen granularen, mikroporösen Aufbau hat und auf diese Weise eine gute Verbindung mit dem darauf aufzubringenden Kunststoff ergibt.

Der hier verwendete Ausdruck «Edelmetall» soll für alle metallischen Materialien gelten, die aufgrund ihrer Eigenschaften, insbesondere einer guten chemischen Beständigkeit, für die Verwendung in Zahnersatzteilen geeignet sind und galvanisch abgeschieden werden können. Dabei kann es sich um Metalle oder Metall-Legierungen mit oder ohne Einlagerungen aus nichtmetallischen Stoffen (z.B. nach der US-PS 3 567 592) handeln.

Ein Vorteil des erfindungsgemässen Verfahrens ist, dass wegen des leicht entfernbaren, niedrig schmelzenden Metalls auch leicht Hohlräume geformt werden können. So kann beispielsweise eine Brücke teilweise schlauchförmig ausgebildet werden, so dass auf dem Zahnfleisch Gold aufliegt und kein unten offener, mit Kunststoff gefüllter Hohlraum vorhanden ist. Ferner gestattet das erfindungsgemässe Verfahren 99,9%iges Gold zu verarbeiten, wobei sich durch die galvanische Abscheidung eine gute Festigkeit des so hergestellten Ersatzteils ergibt. Schliesslich gewährleistet das erfindungsgemässe Verfahren eine Wiedergabe der Komplementärform mit höchster Genauigkeit.

Sollte das nach giesstechnischen Gesichtspunkten ausgewählte, niedrig schmelzende Metall nicht ausreichend homogen sein, so kann auf den Abguss 6 zunächst eine dünne Nickel- oder Kupferschicht aufgalvanisiert werden, die einen homogenen Leiter bildet, worauf dann die Edelmetallschicht aufgalvanisiert wird. Diese Hilfsschicht aus Nickel- oder Kupfer kann anschliessend nach Herausschmelzen des Abgusses 6 wieder vom fertigen Zahnersatzteil entfernt werden.

Das beschriebene Verfahren der Herstellung eines Metallersatzteiles 9 kann im Dentalbereich für Brücken, Kronen, Füllungen, Prothesen und dgl. verwendet werden.

Dabei kann eine bis zu 5 mm dicke Schicht galvanisch abgeschieden werden, je nach Verwendungszweck des betreffenden Metallersatzteils. Es kann beispielsweise eine Stahlplatte durch das erfindungsgemässe Verfahren hergestellt werden, die als Prothese einsetzbar ist. Durch entsprechende Ausgestaltung der Komplementärform können an diese Stahlplatte Schiebegelenke oder Klammern galvanisch mitangeformt werden, die zur Verbindung mit den Zahnersatzteilen dienen.

Die durch das erfindungsgemässe Verfahren hergestellten Kronen oder Brücken werden üblicherweise mit Kunststoff ausgegossen.

Das niedrig schmelzende, elektrisch leitfähige Material kann ein mit Metallpartikeln durchsetzter Kunststoff sein. Die für die Giessform und den niedrig schmelzenden Abguss verwendeten Materialien werden so gewählt, dass die Giessform bei der Schmelztemperatur des Abgussmaterials formgenau bleibt.

**Patentansprüche**

1. Verfahren zum Herstellen von Zahnersatzteilen aus Edelmetall, insbesondere Gold, vorzugsweise mit einem Überzug aus Porzellan oder Kunststoff, bei dem man eine Komplementärform (1) des Ersatzteils herstellt, von dieser Form (1) eine Giessform (5) herstellt und in der Giessform (5) einen Abguss (6) der Komplementärform (1) herstellt, dadurch gekennzeichnet, dass man den Abguss (6) aus einem niedrig schmelzenden, elektrisch leitfähigen Material, insbesondere Metall giesst, den elektrisch leitfähigen Abguss (6) galvanisch mit einer mechanisch zusammenhängenden Schicht des Edelmetalls überzieht und den Abguss (6) entfernt, wobei gegebenenfalls das so erhaltene Ersatzteil (9) danach mit einem Überzug aus Porzellan oder Kunststoff versehen wird.

2. Verfahren nach Anspruch 1, dadurch gekennzeichnet, dass man die Edelmetallschicht bis zu einer Dicke von wenigstens 0,05 mm herstellt.

3. Verfahren nach Anspruch 1 oder 2, dadurch gekennzeichnet, dass man die Edelmetallschicht mit einer Dicke von höchstens etwa 5,0 mm herstellt.

4. Verfahren nach einem der vorhergehenden Ansprüche, dadurch gekennzeichnet, dass man die Giessform (5) aus formgenauem elastischem Kunststoff herstellt und den Abguss (6) bei einer mit der Kunststoff-Giessform (5) verträglichen Giesstemperatur giesst.

5. Verfahren nach einem der vorhergehenden Ansprüche, dadurch gekennzeichnet, dass man eine Giessform (5) aus einem Zweikomponenten-Silikonkautschuk verwendet.

6. Verfahren nach einem der vorhergehenden Ansprüche, dadurch gekennzeichnet, dass man den Abguss (6) aus einer bei etwa 95 °C schmelzenden Sn-Pb-Bi-Legierung herstellt.

7. Verfahren nach einem der vorhergehenden Ansprüche, dadurch gekennzeichnet, dass man die Giessform (5) unter Vakuum oder Druckeinwirkung herstellt.

8. Verfahren nach einem der vorhergehenden Ansprüche, dadurch gekennzeichnet, dass man den Abguss (6) durch Ausschmelzen entfernt.

9. Verfahren nach einem der vorhergehenden Ansprüche, dadurch gekennzeichnet, dass man auf die Edelmetallschicht eine beim Entfernen des Abgusses (6) beständige, jedoch anderweitig leicht entfernbare Schutzschicht aufträgt.

10. Verfahren nach Anspruch 9, dadurch gekennzeichnet, dass man die Schutzschicht galvanisch aufträgt.

11. Verfahren nach Anspruch 9 oder 10, dadurch gekennzeichnet, dass man eine Schutzschicht aus Nickel oder Nickellegierung verwendet.

12. Verfahren nach einem der vorhergehenden Ansprüche, bei dem das erhaltene Ersatzteil (9) wenigstens in Teilbereichen mit einem Überzug versehen wird, dadurch gekennzeichnet, dass man die Edelmetallschicht wenigstens in den Teilbereichen mit einer die Haftung des Überzuges fördernden Oberfläche versieht.

13. Verfahren nach Anspruch 12, dadurch gekennzeichnet, dass man beim Herstellen der Edelmetallschicht eine erste Teilschicht mit glatter Oberfläche und darauf eine daran festhaftende zweite Teilschicht mit rauher Oberfläche elektrolytisch abscheidet.

14. Verfahren nach Anspruch 13, dadurch gekennzeichnet, dass man die erste Teilschicht mit einer Dicke von 0,1 bis 0,2 mm und die zweite Teilschicht mit einer kleineren Dicke als die erste Teilschicht herstellt.

15. Verfahren nach einem der vorhergehenden Ansprüche, bei dem das erhaltene Ersatzteil (9) mit einem Überzug versehen wird, dadurch gekennzeichnet, dass man vor dem Auftragen des Überzuges eine das Haften des Überzuges verbessernde Zwischenschicht aus einem anderen Material aufträgt.

16. Verfahren nach Anspruch 15, dadurch gekennzeichnet, dass man die Zwischenschicht galvanisch aufträgt.

17. Verfahren nach Anspruch 15 oder 16, dadurch gekennzeichnet, dass man eine nach dem Auftragen oxidierte Zwischenschicht verwendet.

**Claims**

1. Process for the manufacture of denture parts of precious metal, in particular of gold, preferably with a coating of porcelain or plastic, in which a complementary form (1) of the denture part is made, a mould (5) is made from this form and a casting (6) of the complementary form (1) is made in the mould (5), characterized in that the casting (6) is cast of a metal with a low melting point, in particular an electrically conductive material, the electrically conductive casting (6) is coated galvanically with a mechanically connected layer of precious metal and the casting (6) is removed, whereupon if need be the denture part (9) thus obtained is then provided with a coating of porcelain or plastic.

2. Process according to Claim 1, characterized in that the precious metal layer is made to a thickness of at least 0.05 mm.

3. Process according to Claims 1 or 2, characterized in that the precious metal layer is made with a maximum thickness of approx. 5.0 mm.

4. Process according to one of the above Claims, characterized in that the mould (5) is made of precisely shaped elastic plastic and the casting (6) is cast at a casting temperature which is compatible with the plastic mould (5).

5. Process according to one of the above Claims, characterized in that a mould (5) of a two-component silicone rubber is used.

6. Process according to one of the above Claims, characterized in that the casting (6) is made of a Sn-Pb-Bi alloy melting at approximately 95 °C.

7. Process according to one of the above Claims, characterized in that the mould (5) is made under vacuum or pressure.

8. Process according to one of the above Claims, characterized in that the casting (6) is removed by melting out.

9. Process according to one of the above Claims, characterized in that a protective coating is applied onto the precious metal layer which is stable upon removal of the casting (6) but is otherwise easily removable.

10. Process according to Claim 9, characterized in that the protective coating is applied galvanically.

11. Process according to Claims 9 or 10, characterized in that a protective coating of nickel or nickel alloy is used.

12. Process according to one of the above Claims in which the obtained denture part (9) is provided at least in partial areas with a coating, characterized in that the precious metal layer is provided at least in the partial areas with a surface which promotes adhesion of the coating.

13. Process according to Claim 12, characterized in that upon manufacture of the precious metal layer a first partial layer with smooth surface is electrolytically deposited and then a second partial layer adhering to it and with a rough surface.

14. Process according to Claim 13, characterized in that the first partial layer is made with a thickness of 0.1 to 0.2 mm and the second partial layer with a smaller thickness than the first partial layer.

15. Process according to one of the above Claims in which the obtained denture part (9) is provided with a coating, characterized in that prior to the application of the coating an intermediate layer of another material improving adhesion of the coating is applied.

16. Process according to Claim 15, characterized in that the intermediate layer is applied galvanically.

17. Process according to Claims 15 or 16, characterized in that an intermediate layer is used which is oxidized after application.

**Revendications**

1. Procédé pour la fabrication de prothèses dentaires en métal précieux, en particulier en or, de préférence avec un revêtement en porcelaine ou en matière plastique, dans lequel on réalise une forme complémentaire (1) de la prothèse, on fabrique à partir de cette forme (1) un moule à couler (5), et on réalise dans le moule à couler (5) un moulage (6) de la forme complémentaire (1), caractérisé en ce qu'on coule le moulage (6) en un matériau électroconducteur à bas point de fusion, en particulier un métal, qu'on revêt par électrodéposition, d'une couche mécaniquement continue du métal précieux, le moulage électroconducteur (6), et qu'on enlève le moulage (6), la prothèse ainsi obtenue (9) étant éventuellement ensuite pourvue d'un revêtement en porcelaine ou matière plastique.

2. Procédé selon la revendication 1, caractérisé en ce qu'on réalise la couche de métal précieux jusqu'à une épaisseur d'au moins 0,05 mm.

3. Procédé selon la revendication 1 ou 2, caractérisé en ce qu'on réalise la couche en métal précieux avec une épaisseur d'au plus environ 5,0 mm.

4. Procédé selon l'une des revendications précédentes, caractérisé en ce qu'on fabrique le moule à couler (5) en un matériau élastique de forme précise, et qu'on coule le moulage (6) à une température de coulée compatible avec le moule à couler (5) en matière plastique.

5. Procédé selon l'une des revendications précédentes, caractérisé en ce qu'on utilise un moule à couler (5) en un caoutchouc siliconé à deux composants.

6. Procédé selon l'une des revendications précédentes, caractérisé en ce qu'on réalise le moulage (6) à partir d'un alliage de Sn-Pb-Bi fondant à environ 95 °C.

7. Procédé selon l'une des revendications précédentes, caractérisé en ce qu'on réalise le moule à couler (5) sous vide ou sous l'effet d'une pression.

8. Procédé selon l'une des revendications précédentes, caractérisé en ce qu'on enlève le moulage (6) par fusion.

9. Procédé selon l'une des revendications précédentes, caractérisé en ce qu'on applique sur la couche de métal précieux une couche de protection résistant à l'enlèvement du moulage (6) mais par ailleurs pouvant être facilement enlevée.

10. Procédé selon la revendication 9, caractérisé en ce qu'on applique la couche de protection par électrodéposition.

11. Procédé selon la revendication 9 ou 10, caractérisé en ce qu'on utilise une couche de protection en nickel ou en un alliage de nickel.

12. Procédé selon l'une des revendications précédentes, dans lequel la prothèse obtenue (9) est, au moins dans des zones partielles, pourvue d'un revêtement, caractérisé en ce qu'on confère à la couche de métal précieux, au moins dans les zones partielles, une surface favorisant l'adhérence du revêtement.

13. Procédé selon la revendication 12, caractérisé en ce qu'on dépose par un procédé électrolytique, lors de la réalisation de la couche de métal précieux, une première couche partielle à surface lisse et, par dessus, une deuxième couche partielle, qui y adhère fortement, à surface rugueuse.

14. Procédé selon la revendication 13, caractérisé en ce qu'on réalise la première couche partielle avec une épaisseur de 0,1 à 0,2 mm et la deuxième couche partielle avec une épaisseur inférieure à celle de la première couche partielle.

15. Procédé selon l'une des revendications précédentes, dans lequel la prothèse obtenue (9) est pourvue d'un revêtement, caractérisé en ce que, avant application du revêtement, on applique une couche intermédiaire, en un autre matériau, et favorisant l'adhérence du revêtement.

16. Procédé selon la revendication 15, caractérisé en ce qu'on applique la couche intermédiaire par électrodéposition.

17. Procédé selon la revendication 15 ou 16, caractérisé en ce qu'on utilise une couche intermédiaire oxydée après l'application.

0 094 615

# Fig.1

# Fig.2

# Fig.3

9